# EUROPEAN PATENT APPLICATION

(11) **EP 4 598 109 A1**
(43) Date of publication of application: **06.08.2025**
(21) Application number: 22960830.2
(22) Date of filing: 27.09.2022
(51) Int. Cl.: H04W 28/00, H04W 24/02

(54) **WIRELESS COMMUNICATION SYSTEM, WIRELESS COMMUNICATION METHOD, CLUSTERING MANAGEMENT DEVICE, AND PROGRAM**

(71) Applicant: NIPPON TELEGRAPH AND TELEPHONE CORPORATION, Chiyoda-ku, Tokyo 100-8116 (JP); NTT DOCOMO, INC., Tokyo 100-6150 (JP)
(72) Inventor: FUKUZONO, Hayato, Musashino-shi, Tokyo 180-8585 (JP); MIYAGI, Toshifumi, Musashino-shi, Tokyo 180-8585 (JP); ONIZAWA, Takeshi, Musashino-shi, Tokyo 180-8585 (JP); OKUYAMA, Tatsuki, Tokyo 100-6150 (JP); SUYAMA, Satoshi, Tokyo 100-6150 (JP); KISHIYAMA, Yoshihisa, Tokyo 100-6150 (JP)
(74) Representative: Hoffmann Eitle
(86) International application number: PCT/JP2022/035997
(87) International publication number: WO 2024/069766

(57) **Abstract**

A wireless communication system according to the present disclosure comprises a central station, a base station, and a terminal station configured to enable wireless inter-terminal station communication. The terminal station transmits information regarding wireless quality and information regarding a service in use to the base station. The base station clusters the terminal station according to clustering control information received from the central station. Also, the base station transmits information received from the terminal station and information regarding a wireless environment of the terminal station to the central station. The central station learns clustering, based on information received from the base station, such that required wireless quality corresponding to the service in use by the terminal station is satisfied, and transmits information regarding learned clustering to the base station as the clustering control information.

## Description

### [Technical Field]

The present disclosure relates to the clustering of terminal stations capable of inter-terminal station communication (UE clustering), particularly to a technology for performing the UE clustering for optimizing the wireless quality of terminal stations.

### [Background Art]

Non-Patent Documents 1 and 2 disclose the management of wireless quality of 5G NR. The wireless quality to be managed is Quality of Experience (QoE). In the 5G NR, a configuration for measuring QoE is transmitted from a base station (NG-RAN Node) to a terminal station (UE : User equipment). The terminal station measures QoE based on the configuration, and transmits the measurement result to the base station as a QoE report. The base station sends the QoE report to a wireless quality server (QoE server). In this way, the wireless quality of each terminal station is managed.

In recent years, UE clustering for clustering terminal stations capable of inter-terminal station communication has been studied for various purposes such as improvement of wireless quality in a network and fairness of use of the network. The UE clustering changes the wireless quality of the terminal station. However, the conventional technologies disclosed in Non-Patent Documents 1 and 2 do not take into consideration that UE clustering changes the wireless quality.

### [Prior Art Document]

### [Non-Patent Document]

[Non-Patent Document 1] 3GPP TR 38.890 V17. 0.0 (2021 to 04), Study on NR QoE (Quality of Experience) management and optimizations for diverse services (Release 17).
[Non-Patent Document 2] Z. Man, L. Dapeng, L. Zhuang and G. Yin, "QoE Management for 5G New Radio," ZTE communications, vol19, no. 3, Sep. 2021.

### [Summary of Invention]

### [Technical Problem]

The present disclosure has been made in view of the above-described problems. An object of the present disclosure is to ensure required wireless quality by optimizing the clustering of terminal stations.

### [Solution to Problem]

In order to achieve the above object, the present disclosure provides a wireless communication system. The wireless communication system according to the present disclosure includes a central station, a base station that communicates with the central station, and a terminal station that wirelessly communicates with the base station. The terminal station is configured to enable wireless inter-terminal station communication. The terminal station is configured to transmit information regarding wireless quality and information regarding a service in use to the base station. The base station is configured to cluster the terminal station (UE clustering) in accordance with clustering control information received from the central station. The base station is configured to transmit the information received from the terminal station and information regarding a wireless environment of the terminal station to the central station. The central station is configured to learn clustering such that required wireless quality corresponding to the service in use by the terminal station is satisfied, based on the information received from the base station, and to transmit information regarding the learned clustering to the base station as the clustering control information.

In order to achieve the above object, the present disclosure also provides a wireless communication method using a terminal station configured to enable wireless inter-terminal station communication. The wireless communication method according to the present disclosure includes the following steps. The first step is a step of transmitting information regarding wireless quality and information regarding a service in use from a terminal station to a base station that wirelessly communicates with the terminal station. The second step is a step of transmitting the information transmitted from the terminal station to the base station and information regarding a wireless environment of the terminal station from the base station to a central station that communicates with the base station. The third step is a step of learning clustering (UE clustering) such that required wireless quality corresponding to the service in use by the terminal station is satisfied, based on the information transmitted from the base station to the central station. The fourth step is a step of transmitting information regarding the learned clustering as clustering control information from the central station to the base station. The fifth step is a step of clustering the terminal station in accordance with the clustering control information transmitted from the central station to the base station.

In order to achieve the above object, the present disclosure provides a clustering management apparatus that manages clustering of a terminal station (UE clustering) configured to enable wireless inter-terminal station communication. The clustering management apparatus according to the present disclosure includes one or more processors and a program memory coupled to the one or more processors and storing executable instructions. The instructions are configured to cause the one or more processors to perform the following processing. The first processing is to acquire information regarding wireless quality of the terminal station, information regarding a service in use by the terminal station, and information regarding a wireless environment of the terminal station from a base station that wirelessly communicates with the terminal station. The second process is to learn clustering, based on the information received from the base station, such that required wireless quality corresponding to the service in use by the terminal station is satisfied. The third process is to transmit information regarding the learned clustering to the base station.

Furthermore, the present disclosure provides a program for achieving the above object. The program according to the present disclosure is configured to cause a computer to execute the following processing. The first processing is to acquire information regarding wireless quality of a terminal station, information regarding a service in use by the terminal station, and information regarding a wireless environment of the terminal station from a base station that wirelessly communicates with the terminal station. The second process is to learn clustering (UE clustering), based on the information received from the base station, such that required wireless quality corresponding to the service in use by the terminal station is satisfied. The third process is to transmit information regarding the learned clustering to the base station. The program of the present disclosure may be recorded in a computer-readable recording medium or may be provided via a network.

### [Advantageous Effects of Invention]

According to the technology of the present disclosure, the clustering (UE clustering) is learned such that the required wireless quality corresponding to the service in use by the terminal station is satisfied, based on the information regarding the wireless quality of the terminal station, the information regarding the service in use by the terminal station, and the information regarding the wireless environment of the terminal station. Thus, the required wireless quality can be secured by optimizing the clustering of terminal stations.

### [Brief Description of Drawings]

[Fig. 1] Fig. 1 is a diagram showing a configuration of a wireless communication system according to an embodiment of the present disclosure.
[Fig. 2] Fig. 2 is a functional block diagram showing functions of the wireless communication system according to the embodiment of the present disclosure.
[Fig. 3] Fig. 3 is a diagram showing an example of a hardware configuration of a central station as a clustering management apparatus.
[Fig. 4] Fig. 4 is a flowchart showing a flow of information between a central station and a base station and between a base station and a terminal station in the wireless communication system according to the embodiment of the present disclosure.
[Fig. 5] Fig. 5 is a flowchart showing processing repeatedly executed in the wireless communication system according to the embodiment of the present disclosure.

### [Description of Embodiments]

### 1. Configuration of Wireless Communication System

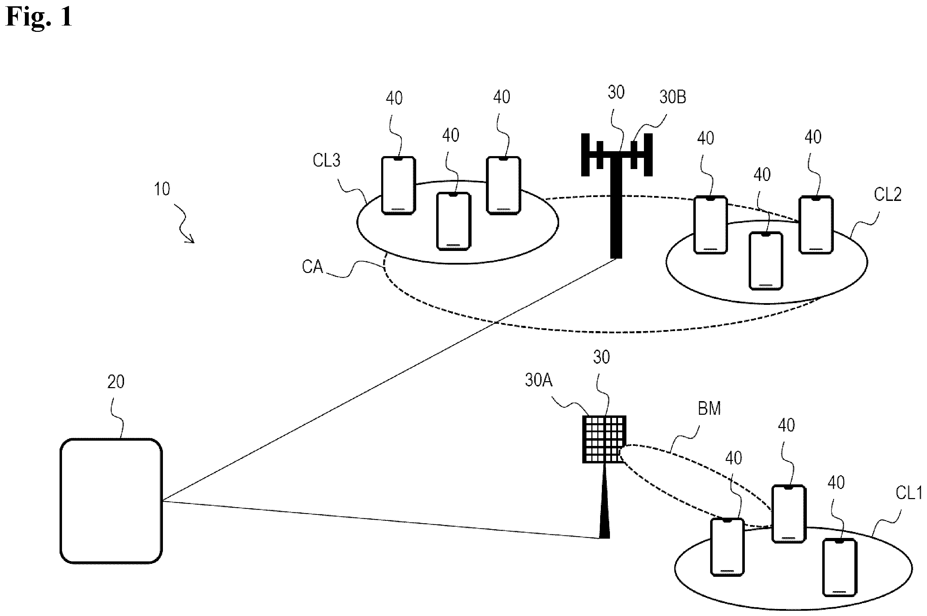

A wireless communication system according to an embodiment of the present disclosure is a system that provides various communication services including Web, voice call, and video distribution to a user. A configuration of the wireless communication system according to the embodiment of the present disclosure is shown in Fig. 1. As shown in Fig. 1, the wireless communication system 10 includes a plurality of terminal stations 40, a plurality of base stations 30, and a central station 20. The terminal station 40 is also referred to as a user equipment (UE). The base station 30 is also referred to as a node or an access point.

The terminal station 40 is a mobile wireless station. The terminal station 40 is a terminal station compatible with MIMO. The terminal station 40 is a terminal station that can form a cluster by wireless inter-terminal station communication (D2D). The terminal station 40 supports various communication services provided by the wireless communication system 10. A user who possesses the terminal station 40 can use a desired communication service by using the terminal station 40. A typical example of the terminal station 40 is a smartphone.

The base station 30 is a wireless station whose position is fixed. The base station 30 wirelessly communicates with the terminal station 40. The base station 30 includes, for example, a base station 30A for small cells that has a phased array antenna and radiates a directional beam BM, and a base station 30B for macro cells that form a wide coverage area CA by waves radiated in all directions. The base station 30 may be configured with a centralized antenna or a distributed antenna.

The central station 20 is an apparatus that is disposed on the network and communicates with each base station 30 via the network. The central station 20 may be, for example, a cloud server or a dedicated server. Alternatively, the central station 20 may be integrated with any of the base stations 30. The central station 20 is configured as a clustering management apparatus that manages clustering (UE clustering) of the terminal station 40. The central station 20 transmits clustering control information for allocating the terminal station 40 to the cluster to each base station 30. In the example shown in Fig. 1, the cluster CL1 is formed by the terminal stations 40 communicating with the base station 30A, and the clusters CL2 and CL3 are formed by the terminal stations 40 communicating with the base station 30B.

### 2. Function of Wireless Communication System

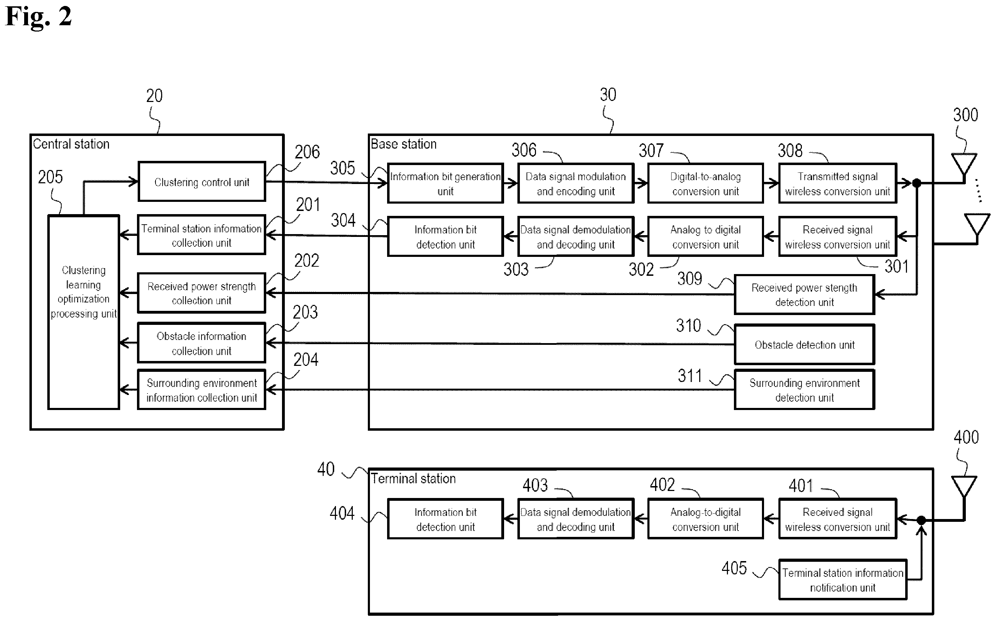

Fig. 2 is a functional block diagram showing functions of the wireless communication system 10. The functions of the terminal station 40, the base station 30, and the central station 20 constituting the wireless communication system 10 will be described below.

The terminal station 40 includes an antenna 400, a received signal wireless conversion unit 401, an analog-to-digital conversion unit 402, a data signal demodulation and decoding unit 403, and an information bit detection unit 404. The wireless signal transmitted from the base station 30 is received by the antenna 400. The wireless signal transmitted from the base station 30 includes cluster allocation for UE clustering.

The wireless signal received by the antenna 400 is converted into an analog received signal in a baseband by the received signal wireless conversion unit 401. The analog received signal obtained by the received signal wireless conversion unit 401 is digitized by the analog-to-digital conversion unit 402 for digital demodulation. The received data signal digitized from the analog received signal is demodulated by the data signal demodulation and decoding unit 403, and further subjected to error correction decoding. The information bits obtained by demodulation and error correction decoding of the received data signal are detected by the information bit detection unit 404.

The terminal station 40 further includes a terminal station information notification unit 405. The terminal station information notification unit 405 generates a signal for notifying the current wireless quality and the service in use of the terminal station 40. The generated signal is transmitted from the antenna 400 to the base station 30. The wireless quality is the quality of experience (QoE) of the user, and a typical example of the wireless quality is a delay time. When the UE clustering is performed, the wireless quality including the delay time changes depending on the current clustering state of the terminal station 40. On the other hand, the notification of the service in use includes quality (required QoE) required for the service providing side. When the current wireless quality of the terminal station 40 does not satisfy the required QoE, it can be said that there is room for improvement in the cluster allocation of the terminal station 40.

The base station 30 includes an antenna 300, a received signal wireless conversion unit 301, an analog-to-digital conversion unit 302, a data signal demodulation and decoding unit 303, and an information bit detection unit 304. The wireless signal transmitted from the terminal station 40 is received by the antenna 300. The wireless signal transmitted from the terminal station 40 includes wireless quality information and in-use service information.

The wireless signal in the RF band received by the antenna 300 is converted into an analog received signal in the baseband by the received signal wireless conversion unit 301. The analog received signal obtained by the received signal wireless conversion unit 301 is digitized by the analog-to-digital conversion unit 302 for digital demodulation. The received data signal digitized from the analog received signal is demodulated by the data signal demodulation and decoding unit 303, and further subjected to error correction decoding. Information bits are obtained by demodulation and error correction decoding of the received data signal. The information bits are detected by the information bit detection unit 304 and transmitted to the central station 20. The information bits transmitted to the central station 20 include the wireless quality information and the in-use service information of the terminal station 40.

The base station 30 includes an information bit generation unit 305, a data signal modulation and encoding unit 306, a digital-to-analog conversion unit 307, and a transmitted signal wireless conversion unit 308. The signal transmitted from the central station 20 to the base station 30 is input to the information bit generation unit 305. The signal input to the information bit generation unit 305 includes the clustering control information for UE clustering.

The information bit generation unit 305 generates information bits of data to be transmitted to the terminal station 40 and the selection result of the optimum base station from the clustering control information. The data to be transmitted to the terminal station 40 includes the optimized cluster allocation. The information bits generated from the clustering control information are subjected to error correction coding by the data signal modulation and encoding unit 306, and further subjected to digital modulation. The digital-modulated transmitted signal is analogized by the digital-to-analog conversion unit 307. The analogized transmitted signal is converted from a baseband signal into an RF band wireless signal by the transmitted signal wireless conversion unit 308, and is transmitted from the antenna 300 to the terminal station 40.

The base station 30 further includes a received power strength detection unit 309, an obstacle detection unit 310, and a surrounding environment detection unit 311. The received power strength detection unit 309 detects the received power strength (RSSI) from the received signal transmitted from the terminal station 40 and received by the antenna 300, and notifies the central station 20 of the detected received power strength. The obstacle detection unit 310 detects an obstacle such as a building or a tree that affects communication with the terminal station 40, and notifies the central station 20 of the detected obstacle. The surrounding environment detection unit 311 detects a surrounding environment such as geography that affects communication with the terminal station 40, and notifies the central station 20 of the detected surrounding environment.

The received power strength, the obstacle, and the surrounding environment are information related to the wireless environment of the terminal station 40. Not only the clustering state but also the wireless environment of the terminal station 40 is a factor that affects the wireless quality of the terminal station 40. As the wireless environment information of the terminal station 40, reference signal received power (RSRP), reference signal received quality (RSRQ), a signal to interference plus noise ratio (SINR), or the like may be detected instead of the received power strength or together with the received power strength.

The central station 20 includes a terminal station information collection unit 201, a received power strength collection unit 202, an obstacle information collection unit 203, and a surrounding environment information collection unit 204. The terminal station information collection unit 201 collects the wireless quality information and the in-use service information of each terminal station 40 notified from the base station 30. The received power strength collection unit 202 collects the received power strength information of each terminal station 40 notified from the base station 30. The obstacle information collection unit 203 collects the obstacle information notified from the base station 30. The surrounding environment information collection unit 204 collects the surrounding environment information notified from the base station 30.

The central station 20, which is a clustering management apparatus, includes a clustering learning optimization processing unit 205 and a clustering control unit 206. The clustering learning optimization processing unit 205 learns UE clustering for optimizing the wireless quality of each terminal station 40 from each piece of collected information. In detail, based on the received power strength information, the obstacle information, and the surrounding environment information that represents the wireless environment of each terminal station 40, clustering of each terminal station 40 is performed so as to reduce the difference between the current wireless quality of each terminal station 40 and the required QoE of the service in use of each terminal station 40. The information regarding the learned clustering is notified to the base station 30 as the clustering control information by the clustering control unit 206.

### 3. Hardware Configuration of Central Station

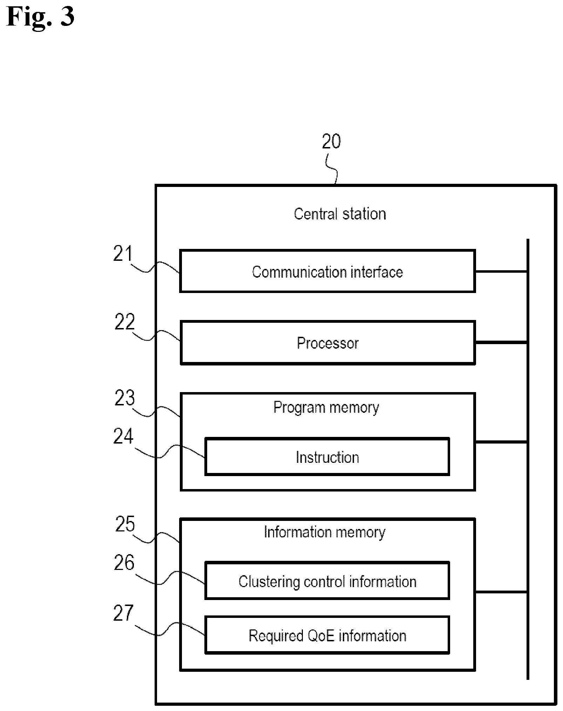

Here, a hardware configuration of the central station 20 as the clustering management apparatus will be described. Fig. 3 is a diagram showing an example of a hardware configuration of the central station 20. The central station 20 shown in Fig. 3 is a computer including a communication interface 21, one or more processors (hereinafter, simply referred to as a processor) 22, a program memory 23, and an information memory 25. The program memory 23 stores a plurality of executable instructions 24 constituting a program. The information memory 25 stores various kinds of information such as clustering control information 26 and required QoE information 27 for each service. The communication interface 21, the program memory 23, and the information memory 25 are communicatively coupled to the processor 22.

The central station 20 is connected to a network via the communication interface 21. The wireless quality information, the in-use service information, and the wireless environment information notified from the base station 30 are received via the communication interface 21. The clustering control information generated by the central station 20 is transmitted to the base station 30 via the communication interface 21.

The processor 22 may be a central processing unit (CPU), a field-programmable gate array (FPGA), an application-specific integrated circuit (ASIC), or another processing unit. Alternatively, the processor 22 may be a combination of two or more CPUs, FPGAs, ASICs, or other processing units. When the instructions 24 stored in the program memory 23 are executed, the processor 22, which is a CPU, an FPGA, an ASIC, or another processing unit, is triggered to perform functions as the clustering management apparatus. The program memory 23 may be a device separate from the processor 22 or may be incorporated in the processor 22.

At least one of the instructions 24 is programmed to cause the processor 22 to collect the wireless quality information, the in-use service information, and the wireless environment information of each terminal station 40 from the base station 30. At least one of the instructions 24 is also programmed to cause the processor 22 to learn clustering, based on the information collected from the base station, such that the required QoE for the service in use is satisfied at each terminal station 40. At least one of the instructions 24 is programmed to cause the processor 22 to transmit the information regarding the learned clustering (clustering control information) to the base station 30.

### 4. Flow of Information in Wireless Communication System

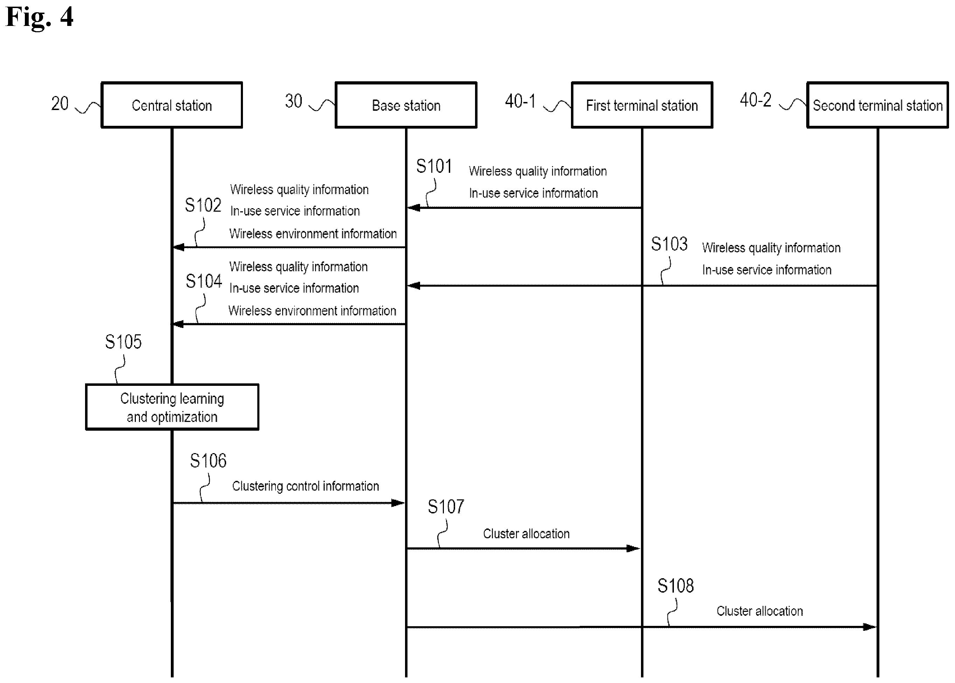

The flow of information in the wireless communication system 10 can be summarized as shown in Fig. 4. Fig. 4 is a flowchart showing the flow of information between the central station 20 and the base station 30 and between the base station 30 and the terminal station 40. The flow of information shown in this flowchart is also the flow of information realized by the wireless communication method according to the present embodiment. In the flowchart, a first terminal station 40-1 and a second terminal station 40-2 are shown as the terminal stations 40 that wirelessly communicate with the base station 30. The first terminal station 40-1 and the second terminal station 40-2 may be terminal stations belonging to the same cluster or may be terminal stations belonging to different clusters.

According to the flowchart shown in Fig. 4, in step S101, the first terminal station 40-1 transmits the wireless quality information and the in-use service information to the base station 30. In step S102, the wireless environment information of the first terminal station 40-1 is transmitted from the base station 30 to the central station 20 together with the wireless quality information and the in-use service information received from the first terminal station 40-1.

In step S103, the second terminal station 40-2 transmits the wireless quality information and the in-use service information to the base station 30. In step S104, the wireless environment information of the second terminal station 40-2 is transmitted from the base station 30 to the central station 20 together with the wireless quality information and the in-use service information received from the second terminal station 40-2.

The timing at which the base station 30 receives the information from the first terminal station 40-1 and the second terminal station 40-2 may be scheduled in advance or may be determined in the course of the situation. The base station 30 may transmit the information regarding the first terminal station 40-1 and the information regarding the second terminal station 40-2 to the central station 20 separately at different timings, or may transmit these pieces of information to the central station 20 collectively at the same timing.

The central station 20 further collects the wireless quality information, the in-use service information, and the wireless environment information of a plurality of terminal stations 40 other than the first terminal station 40-1 and the second terminal station 40-2. In step S105, the central station 20 learns clustering for optimizing the wireless quality of each terminal station 40 including the first terminal station 40-1 and the second terminal station 40-2 from each collected information. The optimization of the wireless quality means that each terminal station 40 satisfies the required QoE of the service in use. In step S106, the clustering control information for instructing the learned clustering to the base station 30 is transmitted from the central station 20 to the base station 30.

In step S107, the base station 30 instructs cluster allocation to the first terminal station 40-1 in accordance with the clustering control information. In step S108, the base station 30 instructs cluster allocation to the second terminal station 40-2 in accordance with the clustering control information. The base station 30 may transmit the instruction for cluster allocation to the first terminal station 40-1 and the instruction for cluster allocation to the second terminal station 40-2 separately at different timings, or may transmit these instructions at the same timing.

**In** the cluster allocation, the first terminal station 40-1 and the second terminal station 40-2 may be allocated to the same cluster or different clusters. Further, for example, they may be allocated to a cluster of another base station 30 having an overlapping coverage area. By changing the cluster allocation among all the terminal stations 40 as appropriate in this way, the required QoE of the service in use at each terminal station 40 is satisfied.

### 5. Processing performed in Wireless Communication System

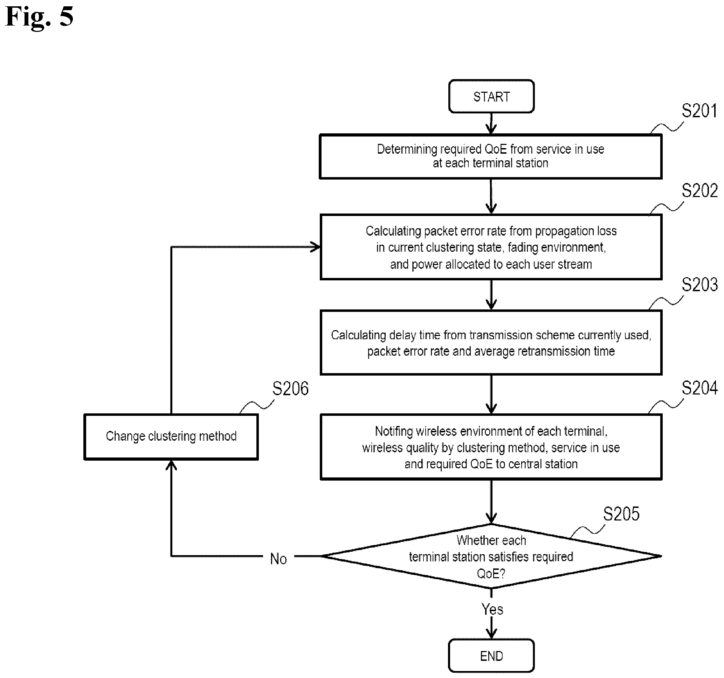

The service used by each terminal station 40 changes with time. The wireless environment of each terminal station 40 also changes with time. Therefore, the wireless communication system 10 repeatedly performs learning of clustering for optimizing the wireless quality of each terminal station 40. Fig. 5 is a flowchart showing processing repeatedly executed in the wireless communication system 10.

In step S201, the required QoE is determined from the service in use of each terminal station 40.

In step S202, each terminal station 40 calculates a packet error rate from the propagation loss in the current clustering state, the fading environment, and the power allocated to each user stream. The packet error rate is calculated using a predefined calculation formula or map with the propagation loss, the fading environment, and the allocated power as parameters.

In step S203, each terminal station 40 calculates a delay time from the transmission scheme currently used, the packet error rate calculated in step S202, and the average retransmission time. The transmission scheme used includes, for example, Code Division Multiple Access (CDMA), Wideband CDMA (WCDMA) (registered trademark), Frequency Division Multiple Access (FDMA), Time Division Multiple Access (TDMA), Orthogonal Frequency Division Multiplexing (OFDM), and Orthogonal Frequency Division Multiple Access (OFDMA). The delay time is calculated using a predefined calculation formula or map with the transmission scheme, the packet error rate, and the average retransmission time as parameters. The delay time represents the wireless quality (QoE) of the terminal station 40 by the current clustering method.

In step S204, the wireless environment of each terminal station 40, the wireless quality by the current clustering method, the service in use, and the required QoE thereof are notified from the base station 30 to the central station 20. When there are a plurality of base stations 30 that communicate with the central station 20, all the base stations 30 notify the central station 20 of the wireless environment, the wireless quality, the service in use, and the required QoE of each terminal station 40.

In step S205, it is determined whether the required QoE is satisfied at each terminal station 40. If the required QoE is not satisfied, the process proceeds to step S206. The condition for the determination in step S205 to be affirmative may be, for example, that the required QoE is satisfied at all the terminal stations 40, or that the required QoE is satisfied at a certain percentage of the terminal stations 40.

In step S206, the clustering method is changed. That is, the cluster allocation to each terminal station 40 is updated so that the difference between the wireless quality of each terminal station 40 and the required QoE is eliminated based on the wireless environment of each terminal station 40.

After the clustering method is changed, steps S202 to S205 are executed again. Then, the steps S202 to S206 are repeatedly executed until the required QoE is satisfied at each terminal station 40, and the clustering method is changed so that the wireless quality is optimized. That is, clustering that optimizes the wireless quality of each terminal station 40 is learned.

If the required QoE is satisfied in step S206, the series of processes is terminated. The processing shown in the flowchart of Fig. 5 may be executed periodically or irregularly. As an example of irregular execution, the processing of steps S201 to S205 may be executed when a service in use at any terminal station 40 is changed.

### [Reference Signs List]

10 Wireless communication system
20 Central station
30 Base station
40 Terminal station

## Claims

1. A wireless communication system comprising:
a central station;
a base station that communicates with the central station; and
a terminal station configured to enable wireless inter-terminal station communication that wirelessly communicates with the base station,
wherein the terminal station is configured to:
transmit information regarding wireless quality and information regarding a service in use to the base station,
the base station is configured to:
cluster the terminal station according to clustering control information received from the central station, and
transmit information received from the terminal station and information regarding a wireless environment of the terminal station to the central station, and
the central station is configured to:
learn clustering, based on information received from the base station, such that required wireless quality corresponding to the service in use by the terminal station is satisfied, and
transmit information regarding learned clustering to the base station as the clustering control information.

2. The wireless communication system according to claim 1, wherein
the terminal station is configured to:
calculate a packet error rate from a propagation loss in a current clustering state of the terminal station, a fading environment of the terminal station, and an allocated power to a user stream of the terminal station;
calculate a delay time from a transmission scheme currently used by the terminal station, the packet error rate, and an average retransmission time; and
transmit the delay time as the information regarding the wireless quality.

3. The wireless communication system according to claim 1 or 2, wherein
the base station is configured to:
transmit at least one of information regarding a strength of a received signal power from the terminal station, information regarding an obstacle affecting communication with the terminal station, and information regarding a surrounding environment affecting communication with the terminal station as the information regarding the wireless environment of the terminal station.

4. A wireless communication method using a terminal station configured to enable wireless inter-terminal station communication, the wireless communication method comprising:
transmitting information regarding wireless quality and information regarding a service in use from the terminal station to a base station that wirelessly communicates with the terminal station;
transmitting information transmitted from the terminal station to the base station and information regarding a wireless environment of the terminal station from the base station to a central station that communicates with the base station;
learning clustering, based on information transmitted from the base station to the central station, such that required wireless quality corresponding to the service in use by the terminal station is satisfied;
transmitting information regarding learned clustering from the central station to the base station as clustering control information; and
clustering the terminal station according to the clustering control information received transmitted from the central station to the base station.

5. The wireless communication method according to claim 4, wherein
the transmitting the information regarding the wireless quality from the terminal station to the base station includes:
calculating a packet error rate from a propagation loss in a current clustering state of the terminal station, a fading environment of the terminal station, and an allocated power to a user stream of the terminal station;
calculating a delay time from a transmission scheme currently used by the terminal station, the packet error rate, and an average retransmission time; and
transmitting the delay time as the information regarding the wireless quality.

6. The wireless communication method according to claim 4 or 5, wherein
the transmitting the information regarding the wireless environment of the terminal station from the base station to the central station includes:
transmitting at least one of information regarding a strength of a received signal power from the terminal station received by the base station, information regarding an obstacle affecting communication between the base station and the terminal station, and information regarding a surrounding environment affecting communication between the base station and the terminal station as the information regarding the wireless environment of the terminal station.

7. A clustering management apparatus for managing clustering of a terminal station configured to enable wireless inter-terminal station communication, the clustering management apparatus comprising:
one or more processors; and
a program memory coupled to the one or more processors and storing executable instructions,
wherein the instructions configured to cause the one or more processors to:
acquire information regarding wireless quality of the terminal station, information regarding a service in use by the terminal station, and information regarding a wireless environment of the terminal station from a base station that wirelessly communicates with the terminal station;
learn clustering, based on information received from the base station, such that required wireless quality corresponding to the service in use by the terminal station is satisfied; and
transmit information regarding learned clustering to the base station.

8. A program configured to cause a computer to execute:
acquire information regarding wireless quality of a terminal station configured to enable wireless inter-terminal station communication, information regarding a service in use by the terminal station, and information regarding a wireless environment of the terminal station from a base station that wirelessly communicates with the terminal station;
learn clustering, based on information received from the base station, such that required wireless quality corresponding to the service in use by the terminal station is satisfied; and
transmit information regarding learned clustering to the base station.
